# EUROPÄISCHE PATENTSCHRIFT

(11) **EP 0 799 580 B1**
(45) Veröffentlichungstag und Bekanntmachung des Hinweises auf die Patenterteilung: **09.05.2001**
(21) Anmeldenummer: 97101722.3
(22) Anmeldetag: 04.02.1997
(51) Int. Cl.: A23N 7/04

(54) **Schälmaschine**
Peeling machine
Machine à éplucher

(30) Priorität: 04.03.1996 DE 19608195
(43) Veröffentlichungstag der Anmeldung: 08.10.1997
(73) Patentinhaber: Hepro GmbH Maschinen und Spezialgeräte, 33129 Delbrück (DE)
(72) Erfinder: Protte, Christoph, 33129 Delbrück (DE)
(74) Vertreter: Weber, Joachim, Dr.

(56) Entgegenhaltungen:
- EP-A- 0 324 155
- DE-C- 217 967
- DE-C- 4 412 561

## Beschreibung

Die Erfindung bezieht sich auf eine Schälmaschine, insbesondere für stangenförmiges Gemüse gemäß dem Oberbegriff des Hauptanspruchs.

Schälmaschinen für stangenförmiges Gemüse, wie etwa Spargel, Gurken, Karotten, Schwarzwurzeln, Rettich oder ähnliches sind aus dem Stand der Technik in unterschiedlichen Ausgestaltungen vorbekannt. Sie weisen mehrere Messerstationen auf, welche in Durchlaufrichtung des Gemüses hintereinander an einem Maschinengestell angeordnet sind, sowie mehrere Transportwalzen-Paare, welche insbesondere jeweils zwischen zwei benachbarten Messerstationen gelagert sind, um das stangenförmige Gemüse zu transportieren und durch die Messerstationen zu schieben. In den Messerstationen werden jeweils Umfangsbereiche der Gemüse-Stangen abgeschält. Die Transportwalzen-Paare sind mit einer Antriebseinrichtung verbunden, um die erforderliche Vorschubbewegung aufzubringen. Eine Vorrichtung der eingangs genannten Art ist beispielsweise in der deutschen Patentschrift 44 12 561 beschrieben.

Die bekannten Schälmaschinen sind jeweils für eine bestimmte Art von zu verarbeitendem Produkt, beispielsweise Spargelstangen, konzipiert. Das Produkt weist dabei im wesentlichen gleichbleibende Abmessungen auf, so daß sowohl die Art und Anordnung der Transportwalzen-Paare als auch der Messerstationen darauf abgestimmt werden kann. Daraus folgt, daß ein beliebiger Wechsel der zu verarbeitenden Produkte nicht oder nur mit erheblichem konstruktivem Aufwand möglich ist.

Der Erfindung liegt die Aufgabe zugrunde, eine Schälmaschine der eingangs genannten Art zu schaffen, welche bei einfachem Aufbau und einfacher, betriebssicherer Handhabbarkeit für die Behandlung unterschiedlichster Produkte geeignet und somit hinsichtlich ihrer Anwendung universell einsetzbar ist.

Erfindungsgemäß wird die Aufgabe durch die Merkmale des Hauptanspruchs gelöst, die Unteransprüche zeigen vorteilhafte Ausgestaltungen der Erfindung.

Bei der erfindungsgemäßen Schälmaschine ist somit vorgesehen, daß jede Transportwalze mittels einer Welle drehbar an einem Schwenkarm gelagert ist, welcher um eine feststehende, senkrecht zur Durchlaufrichtung des Gemüses angeordnete Achse schwenkbar an dem Maschinengestell gelagert ist und daß an der feststehenden Achse ein erstes Antriebsrad der Antriebseinrichtung gelagert ist, welches in Antriebsverbindung mit einem zweiten Antriebsrad ist, das an der Welle der Transportwalze befestigt ist.

Die erfindungsgemäße Schälmaschine zeichnet sich durch eine Reihe erheblicher Vorteile aus. Da die Transportwalze selbst an einem Schwenkarm gelagert ist, ist es möglich, den Abstand der ein Transportwalzen-Paar bildenden Transportwalzen in einem weiten Bereich zu variieren, ohne daß hierzu bauliche Änderungen oder Umrüstungen erforderlich wären. Es können somit in beliebiger Reihenfolge unterschiedlichste Gemüse verarbeitet werden, beispielsweise Gurken, Karotten, Spargel etc. . Da die jeweilige Transportwalze über das erste und zweite Antriebsrad angetrieben wird, ändern sich durch die Verschwenkung des Schwenkarmes die Antriebsparameter der Transportwalze nicht. Dies bedeutet, daß die eingestellte Vorschubgeschwindigkeit exakt beibehalten werden kann, so daß stets optimale Schnittbedingungen an den Messern vorherrschen.

Ein weiterer Vorteil liegt darin, daß der Antrieb der Schälmaschine einfach und störungsunanfällig ausgebildet werden kann, so daß ein hohes Maß an Betriebssicherheit gewährleistet ist.

In günstiger Weise ist vorgesehen, daß das erste Antriebsrad und das zweite Antriebsrad als Zahnräder ausgebildet sind, welche miteinander kämmen. Zum einen wird hierdurch ein schlupffreier Antrieb sichergestellt, zum anderen ist es möglich, die beiden Zahnräder mit unterschiedlichem Teilkreisdurchmesser zu versehen, um zusätzlich eine Getriebefunktion zu gewährleisten.

Das erste Antriebsrad ist bevorzugterweise mit der Antriebseinrichtung direkt gekoppelt, beispielsweise durch Verbindung mit einem Riemenrad, welches durch einen Riementrieb der Antriebseinrichtung angetrieben wird. Der Riementrieb kann in Form eines doppelseitigen Zahnriemens ausgestaltet sein, welcher das Riemenrad umschlingt.

Die Transportwalze ist bevorzugterweise über einen Freilauf an der Welle gelagert, um geringfügige Durchmesser-Änderungen der zu verarbeitenden Gemüse berücksichtigen zu können und um Beschädigungen der Gemüsestangen zu vermeiden.

Zur Aufpressung eines ausreichenden Anpreßdrucks der Transportwalzen gegen die Gemüsestangen ist es günstig, wenn zwischen dem Schwenkarm und dem Maschinengestell eine Anpreßkraft-Einrichtung angeordnet ist. Diese kann eine Kolben-Zylindereinheit oder eine Federeinrichtung umfassen. Insbesondere bei relativ schweren Gemüsen, beispielsweise Gurken wird ein sicherer Transport über eine ausreichende Anpreßkraft der Transportwalzen gewährleistet.

Da es für einen universellen Einsatz der Schälmaschine erforderlich sein kann, unterschiedliche Transportwalzen zu verwenden, beispielsweise profilierte Transportwalzen oder Transportwalzen unterschiedlicher Elastizität oder unterschiedlichen Durchmessers, ist es günstig, wenn die Transportwalze mittels eines Bajonettverschlusses an der Welle befestigt ist. Die Transportwalzen können dann auch einfach abgenommen werden, beispielsweise um Reinigungs- oder Wartungsarbeiten an der Schälmaschine durchzuführen.

In Abhängigkeit von der speziellen Konstruktion der Messerstationen kann es günstig sein, diese hinsichtlich der Bewegung der Messer und der Anpreßkraft der Messer gezielt mittels einer Steuereinrichtung zu betätigen. Dabei werden die Messer geschlossen, wenn sich ein Gemüse zur Bearbeitung im Bereich der Messerstation befindet, während die Messer geöffnet werden, wenn kein Schnittvorgang durchgeführt wird. Dies dient sowohl zum Aufbringen einer optimalen Schneidkraft, als auch zur Abfuhr von abgeschälten Oberflächenbereichen oder Spänen des zu verarbeitenden Produkts. Zur Steuerung der Messerstationen ist es günstig, wenn zwischen dem Schwenkarm und dem Maschinengestell bzw. im Bereich des Schwenkarms ein Sensor zur Erfassung einer Schwenkbewegung des Schwenkarms angeordnet ist. Der Sensor reagiert somit auf ein Einlaufen eines Produktes in das jeweilige Transportwalzen-Paar und gestattet es, das diesem direkt nachgeordnete Messerpaar der Messerstation zu betätigen.

In Abhängigkeit von dem jeweils zu verarbeitenden Produkt ist die Transportwalze hinsichtlich ihres Werkstoffs und ihrer Dimensionierung anpaßbar, sie kann beispielsweise aus einem weichelastischen Werkstoff oder einem hartelastischen Werkstoff hergestellt sein. Auch die Form der Transportwalze ist anpaßbar, diese kann zylindrisch ausgebildet oder in ihrem mittleren Bereich mit einem verringerten Durchmesser versehen sein.

Zur universellen Einsetzbarkeit der Schälmaschine trägt es weiterhin bei, wenn jede Messerstation an einem Schnellwechselträger gelagert ist, welcher an dem Maschinengestell befestigt ist. Somit können die einzelnen Messerstationen in einfachster Weise entnommen werden. Hierdurch wird zum einen die Reinigung der Messerstationen erleichtert, zum anderen können Wartungsarbeiten, wie beispielsweise das Austauschen der Messer in einfachster Weise vorgenommen werden. Weiterhin ist es möglich, unterschiedliche Messerstationen in Anwendung zu bringen, welche den jeweils zu verarbeitenden Produkten exakt angepaßt sind.

Der Schnellwechselträger weist bevorzugterweise eine vertikale Trägerplatte auf, welche mit einer Ausnehmung zur Durchführung des Gemüses versehen ist. Die Trägerplatte dient zusätzlich als Prallelement, um abgeschälte Späne oder Oberflächenbereiche der vorangegangenen Messerstation aufzufangen und abzuleiten.

Weiterhin kann es günstig sein, die Messerstationen so auszubilden, daß diese in einem weiten Durchmesserbereich des Gemüses Verwendung finden können. Hierzu ist jedes Messer der Messerstation an einer Einlaufplatte gelagert, welche schwenkbar an der Trägerplatte angebracht ist. Eine Gemüse-Stange kommt beim Einlauf in die Messerstation somit zuerst mit der Einlaufplatte in Kontakt, verschwenkt diese und berührt erst dann die bereist geöffneten Messer. Es wird somit vermieden, daß die Gemüse-Stange direkt gegen die Messer schlägt und beschädigt wird. Störungen des Betriebsablaufs können somit vermieden werden.

Als besonders vorteilhaft hat es sich erwiesen, wenn die Schwenkachse der Einlaufplatte im wesentlichen in der Ebene der Trägerplatte liegt. Weiterhin ist es günstig, wenn die Einlaufplatte in einer Schließstellung der Messereinheit elastisch vorgespannt ist. Die elastische Vorspannung dient unter anderem zur Aufbringung einer ausreichenden Andruckkraft der Messer beim Schnittvorgang.

Erfindungsgemäß können die Messer gerade oder gebogen ausgebildet sein, abhängig von der Zahl der Messerstationen und der Art des zu verarbeitenden Produkts.

Die erfindungsgemäße Schälmaschine ist sowohl zum horizontalen als auch zum vertikalen Durchlauf der Produkte geeignet. Eine horizontale Anordnung ist insbesondere bei länglicheren, leichteren Gemüsen, wie beispielsweise Spargel vorteilhaft, während schwere, relativ kurze, einen größeren Durchmesser aufweisende Produkte, wie beispielsweise Gurken bevorzugterweise mit einer vertikal angeordneten Schälmaschine bearbeitet werden.

Im folgenden wird die Erfindung anhand von Ausführungsbeispielen in Verbindung mit der Zeichnung beschrieben. Dabei zeigt:
- Fig. 1: eine Seitenansicht einer erfindungsgemäßen Transportwalze, welche an einem Schwenkarm gelagert und mit der Antriebseinrichtung verbunden ist,
- Fig. 2: eine schematische Draufsicht auf ein Transportwalzen-Paar mit Schwenkarmen, Antrieb, Sensoreinrichtung und Anpreßkraft-Einrichtung,
- Fig. 3: eine vereinfachte Draufsicht auf ein Ausführungsbeispiel einer erfindungsgemäßen Messerstation,
- Fig. 4: eine Draufsicht auf ein weiteres Ausführungsbeispiel einer Messerstation, und
- Fig. 5: eine Seitenansicht, ähnlich Fig. 1, mit zugeordneter Messerstation, welche ähnlich Fig. 3 ausgebildet ist.

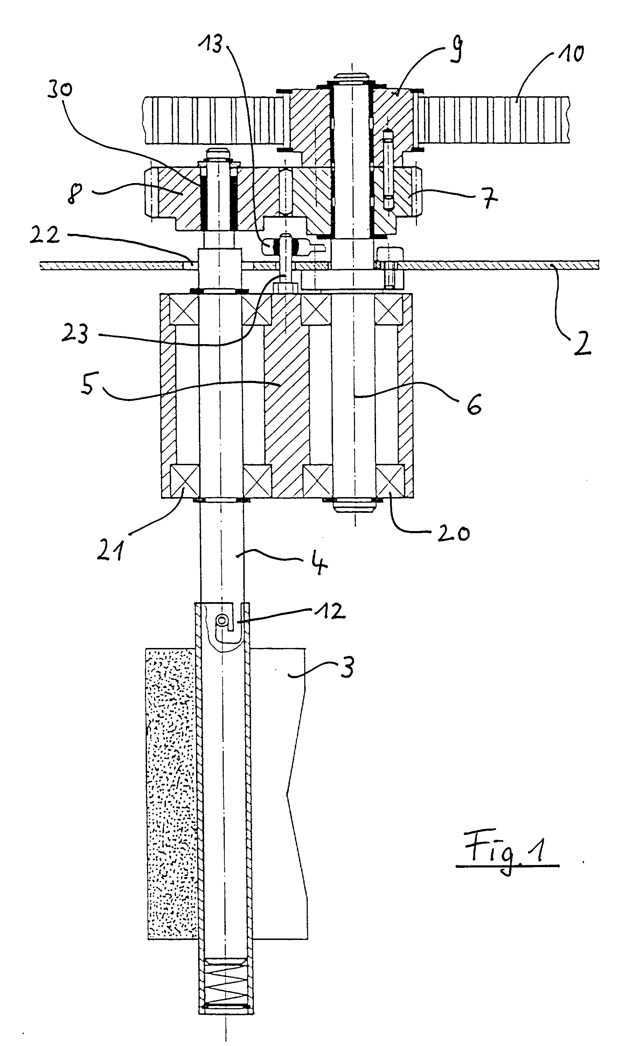

Die Fig. 1 zeigt in Seiten-Schnittansicht einen Teilbereich eines Maschinengestells 2, an welchem eine feststehende Achse 6 gelagert ist. Diese trägt mittels Lagern 20 einen länglichen Schwenkarm 5, an dessen anderem Ende mittels Lagern 21 drehbar eine Welle 4 gelagert ist. Am unteren Ende der Welle 4 ist mittels eines Bajonettverschlusses 12 eine Transportwalze 3 drehfest befestigt. Die Transportwalze 3 kann zylindrisch ausgebildet sein, sie kann jedoch auch in ihrem mittleren Bereich einen verringerten Durchmesser aufweisen, wie die rechte Darstellungshälfte der Fig. 1 zeigt.

Der obere Endbereich der Welle 4 durchgreift eine Ausnehmung 22 des Maschinengestells 2, so daß das Maschinengestell eine Verschwenkung des Schwenkarms 5 und damit der Welle 4 nicht behindert.

Das obere Ende der Welle 4 ist mit einem Freilauf 30 mit einem zweiten Antriebsrad 8 (Zahnrad) verbunden, welches mit einem ersten Antriebsrad 7 kämmt, welches drehbar auf der Achse 6 gelagert ist. Der Freilauf sperrt in einer Richtung, um einen Transport der Produkte sicherzustellen, gestattet jedoch ein beschädigungsfreies Voreilen der Produkte, falls dessen Durchlaufgeschwindigkeit größer als die Umfangsgeschwindigkeit der Transportwalzen 3 ist. Ebenfalls drehbar auf der Achse 6 ist ein Riemenrad 9 gelagert, welches drehfest mit dem ersten Antriebsrad 7 verbunden ist. Eine Drehung des Riemenrades 9 führt somit zwangsweise zu einer Drehung des ersten Antriebsrades 7 und damit auch zu einer Drehung des zweiten Antriebsrades 8, welches wiederum die Welle 4 und damit die Transportwalze 3 antreibt. Diese Antriebsverbindung ist unabhängig von der jeweiligen Schwenkstellung des Schwenkarms 5.

Die Fig. 1 zeigt weiterhin einen Detektorbolzen 23, welcher im mittleren Bereich des Schwenkarms 5 befestigt ist. Der Detektorbolzen 23 wirkt mit einem Sensor 13 zusammen, welcher die jeweilige Position des Schwenkarms 5 an eine nicht dargestellte Steuereinrichtung meldet.

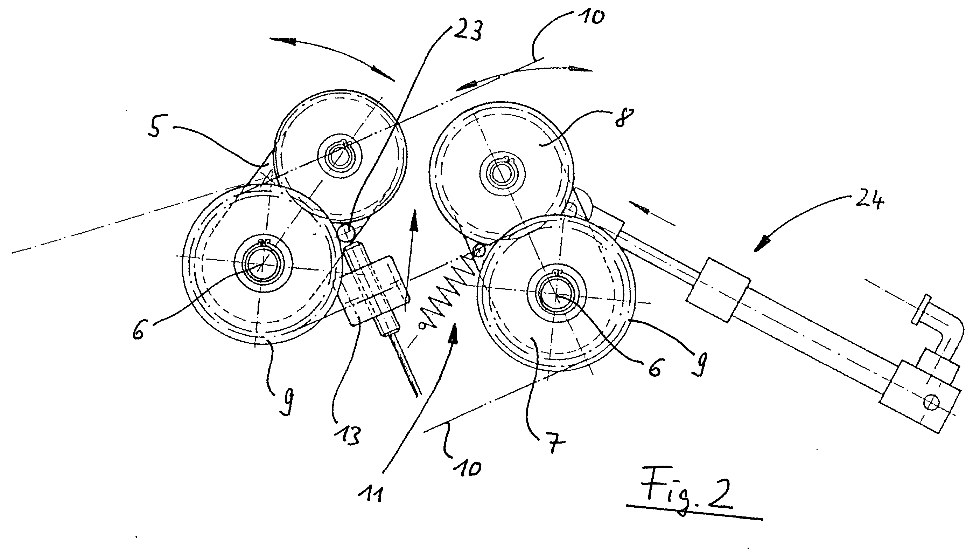

Die Fig. 2 zeigt in Draufsicht die in Fig. 1 dargestellte Anordnung. Zur Verdeutlichung der Darstellung sind die gezeigten Anpreßkraft-Einrichtungen nur in der rechten Bildhälfte abgebildet, gleiches gilt für den Sensor 13, welcher ebenfalls in doppelter Ausführung vorhanden sein kann.

Die Fig. 2 zeigt insbesondere die Anordnung der beiden Riemenräder 9 sowie des Riementriebs 10. Dieser umschlingt S-förmig die beiden Riemenräder 9. Es ist offensichtlich, daß der Riementrieb 10 sämtliche Riemenräder 9 der einzelnen Transportwalzen-Paare antreibt und zusätzlich über ein nicht dargestelltes Antriebsrad, welches einem Motor zugeordnet ist, geführt wird.

In der rechten Bildhälfte der symmetrischen Darstellung von Fig. 2 ist eine Federeinrichtung 11 dargestellt, welche als Zugfeder ausgebildet ist, um die Schwenkarme 5 in eine Schließstellung vorzuspannen. Es ist jedoch auch möglich, die Federeinrichtung 11 auf der entgegengesetzten Seite des Schwenkarms 5 anzuordnen und als Druckfeder-Einrichtung auszugestalten. Alternativ hierzu kann auch eine Kolben-Zylindereinheit 24 vorgesehen sein, um eine Verschwenkung des jeweiligen Schwenkarms 5 durchzuführen bzw. einen ausreichenden Anpreßdruck der Transportwalzen 3 auf das zu transportierende Gemüse aufzubringen.

Im mittleren Bereich der Fig. 2 ist mit einem nach oben gerichteten Pfeil die Durchlaufrichtung der Gemüsestange angedeutet, während die bogenförmigen Doppelpfeile die Verschwenkmöglichkeit der Schwenkarme 5 bzw. der an diesen gelagerten Transportwalzen 3 verdeutlichen.

Die Fig. 2 zeigt weiterhin die Zuordnung des Sensors 13 zu dem Detektorbolzen 23. Letzterer ist, wie sich auch aus Fig. 1 ergibt, ebenfalls in einer nicht näher bezeichneten Ausnehmung des Maschinengestells 2 aufgenommen, so daß auch der Detektorbolzen 23 die Verschwenkung des Schwenkarms 5 nicht behindert.

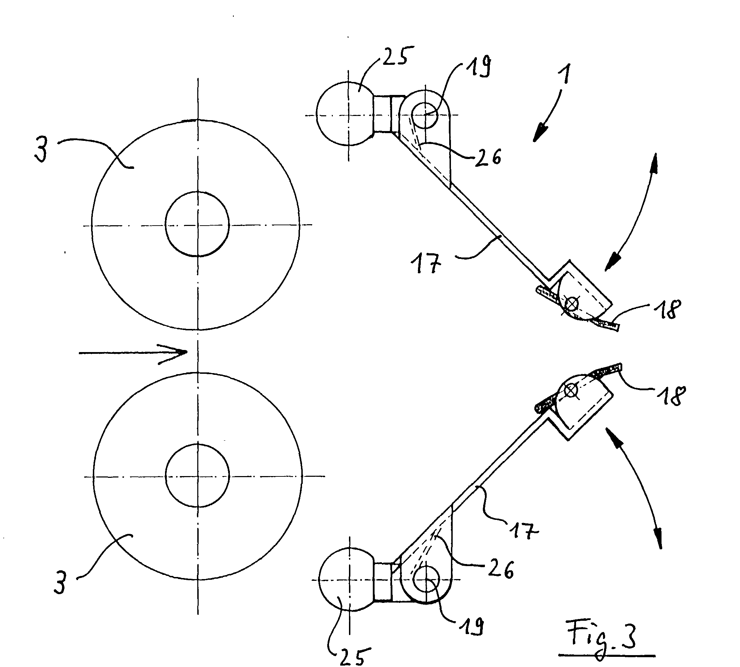

Die Fig. 3 zeigt in der schematischen Draufsicht ein Transportwalzen-Paar 3 sowie die Durchlaufrichtung des Gemüses durch die Transportwalzen (siehe Pfeil). Weiterhin ist in der Draufsicht eine Messerstation 1 dargestellt. An einem Träger 25 ist jeweils eine Einlaufplatte 17 gelagert, welche um eine Schwenkachse 19 verschwenkbar und durch eine nur schematisch dargestellte Feder 26 in eine Schließstellung vorgespannt ist. Die bogenförmigen Doppelpfeile verdeutlichen die Schwenkmöglichkeit der Einlaufplatten 17, welche an ihren freien Enden jeweils ein Messer 18 tragen. Die Messer 18 sind in bekannter Weise ausgebildet und schwenkbar an den freien Enden der Einlaufplatten 17 gelagert.

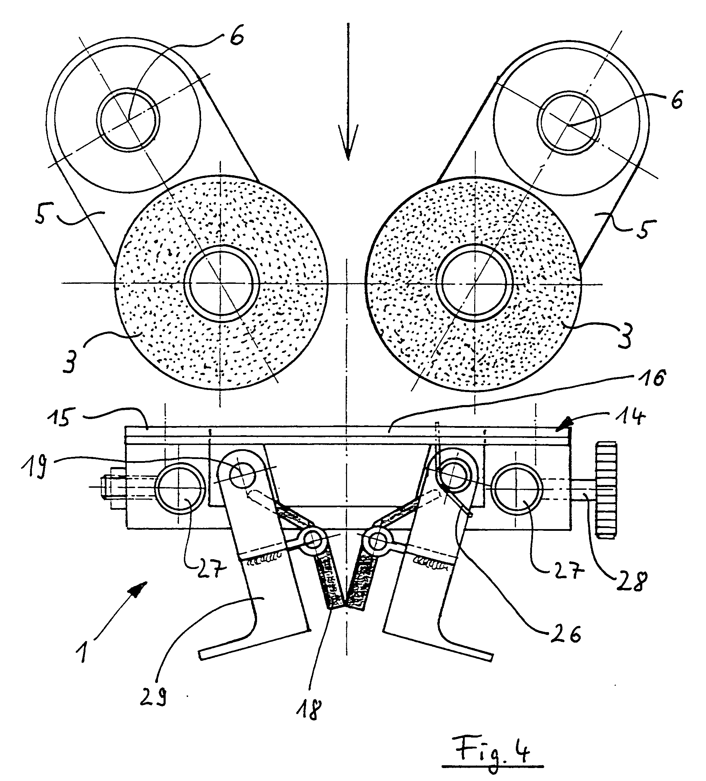

Die Fig. 4 zeigt ein weiteres Ausführungsbeispiel, bei welchem in der schematischen Unteransicht die Transportwalzen 3 sowie die zugeordneten Schwenkarme 5 und die Durchlaufrichtung des Gemüses (siehe Pfeil) verdeutlicht sind. Die Messerstation 1 umfaßt einen Schnellwechselträger 14, der eine Trägerplatte 15 hat, die lösbar an dem Maschinengestell gelagert ist. Die Lagerung kann beispielsweise über Bolzen 27 erfolgen, die mit einer Ringnut versehen sind. In die Ringnut greift beispielsweise eine Stellschraube 28 oder ein Kugelrastbolzen ein. Mit dem Kugelrastbolzen, der im einzelnen nicht dargestellt ist, erfolgt somit eine Positionierung, eine zusätzliche Feststellung erfolgt durch die Stellschraube 28. Somit wird die Trägerplatte 15 exakt positioniert und gegen ein unbeabsichtigtes Lösen gesichert.

Die Messer 18 sind ebenfalls schwenkbar an Tragarmen 19 gelagert, welche wiederum um eine Schwenkachse 19 schwenkbar an der Trägerplatte 15 gelagert sind. Die Trägerplatte 15 weist in ihrem mittleren Bereich eine Ausnehmung 16 auf, durch welche das Gemüse durchgeführt wird. Die Messer 18 können in Form von bogenförmigen Messern ausgebildet sein, sie werden ebenfalls durch Federn 26 in eine Schließstellung vorgespannt.

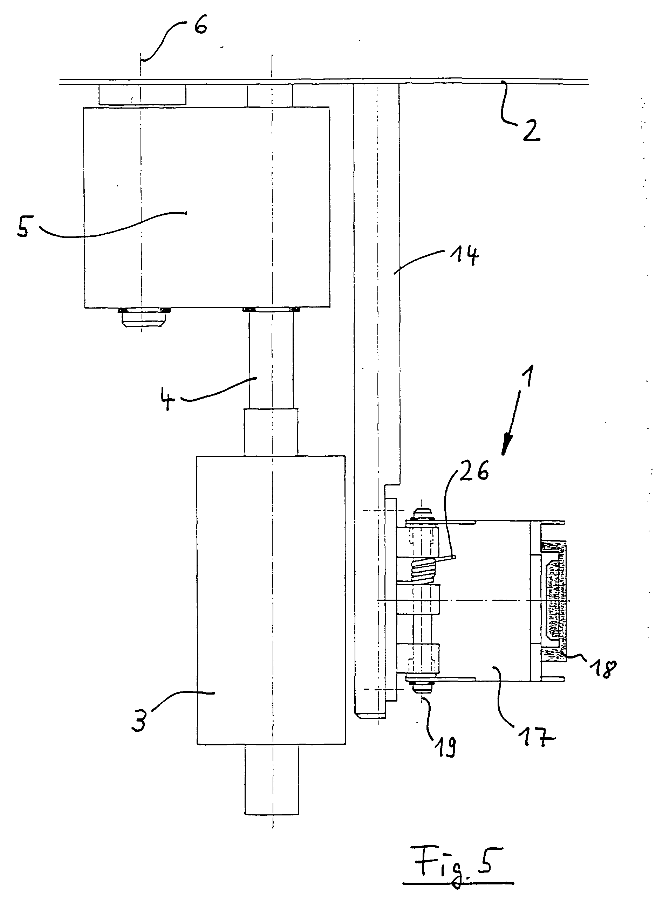

Die Fig. 5 zeigt in vereinfachter Seitenansicht die bereits in Fig. 1 beschriebene Lagerung der Transportwalze 3 mittels der Welle 4 und des Schwenkarms 5. Weiterhin ist in der Seitenansicht eine Messerstation 1 dargestellt, welche ähnlich wie in den Fig. 3 und 4 beschrieben, aufgebaut ist.

Die erfindungsgemäße Schälmaschine ermöglicht es, ohne Umrüstarbeiten und ohne konstruktive Änderungen stangenförmige Gemüse unterschiedlichster Durchmesser zu verarbeiten. Dies wird sowohl durch die beschriebene Anordnung und Lagerung der Transportwalzen-Paare als auch durch die erfindungsgemäße Ausgestaltung der Messerstationen gewährleistet.

Zusammenfassend ist folgendes festzustellen:
Die Erfindung betrifft eine Schälmaschine, insbesondere für stangenförmiges Gemüse, mit mehreren Messerstationen 1, welche in Durchlaufrichtung des Gemüses hintereinander an einem Maschinengestell 2 angeordnet sind, sowie mit mehreren Transportwalzen-Paaren 3, welche insbesondere jeweils zwischen zwei Messerstationen 1 gelagert sind, wobei jedes Transportwalzen-Paar 3 mit einer Antriebseinrichtung verbunden ist, dadurch gekennzeichnet, daß jede Transportwalze 3 mittels einer Welle 4 drehbar an einem Schwenkarm 5 gelagert ist, welcher um eine feststehende, senkrecht zur Durchlaufrichtung des Gemüses angeordnete Achse 6 schwenkbar an dem Maschinengestell 2 gelagert ist und daß an der feststehenden Achse 6 ein erstes Antriebsrad 7 der Antriebseinrichtung gelagert ist, welches in Antriebsverbindung mit einem zweiten Antriebsrad 8 ist, das an der Welle 4 der Transportwalze 3 befestigt ist.

## Patentansprüche

1. Schälmaschine, insbesondere für stangenförmiges Gemüse, mit mehreren Messerstationen (1), welche in Durchlaufrichtung des Gemüses hintereinander an einem Maschinengestell (2) angeordnet sind, sowie mit mehreren Transportwalzen-Paaren (3), welche insbesondere jeweils zwischen zwei Messerstationen (1) gelagert sind, wobei jedes Transportwalzen-Paar (3) mit einer Antriebseinrichtung verbunden ist, dadurch gekennzeichnet, daß jede Transportwalze (3) mittels einer Welle (4) drehbar an einem Schwenkarm (5) gelagert ist, welcher um eine feststehende, senkrecht zur Durchlaufrichtung des Gemüses angeordnete Achse (6) schwenkbar an dem Maschinengestell (2) gelagert ist und daß an der feststehenden Achse (6) ein erstes Antriebsrad (7) der Antriebseinrichtung gelagert ist, welches in Antriebsverbindung mit einem zweiten Antriebsrad (8) ist, das an der Welle (4) der Transportwalze (3) befestigt ist.

2. Schälmaschine nach Anspruch 1, dadurch gekennzeichnet, daß das erste Antriebsrad (7) und das zweite Antriebsrad (8) als Zahnräder ausgebildet sind, welche miteinander kämmen.

3. Schälmaschine nach einem der Ansprüche 1 oder 2, dadurch gekennzeichnet, daß das erste Antriebsrad (7) mit der Antriebseinrichtung gekoppelt ist.

4. Schälmaschine nach Anspruch 1, dadurch gekennzeichnet, daß das erste Antriebsrad (7) mit einem Riemenrad (9) verbunden ist, welches durch einen Riementrieb (10) der Antriebseinrichtung angetrieben wird.

5. Schälmaschine nach einem der Ansprüche 1 bis 4, dadurch gekennzeichnet, daß das Antriebsrad (8) über einen Freilauf (30) an der Welle (4) gelagert ist.

6. Schälmaschine nach einem der Ansprüche 1 bis 5, dadurch gekennzeichnet, daß zwischen dem Schwenkarm (5) und dem Maschinengestell (2) eine Anpreßkraft-Einrichtung angeordnet ist.

7. Schälmaschine nach Anspruch 6, dadurch gekennzeichnet, daß die Anpreßkraft-Einrichtung eine Kolben-Zylindereinheit (24) umfaßt.

8. Schälmaschine nach Anspruch 6, dadurch gekennzeichnet, daß die Anpreßkraft-Einrichtung eine Federeinrichtung (11) umfaßt.

9. Schälmaschine nach einem der Ansprüche 1 bis 8, dadurch gekennzeichnet, daß die Transportwalze (3) lösbar an der Welle (4) befestigt ist.

10. Schälmaschine nach Anspruch 9, dadurch gekennzeichnet, daß die Transportwalze (3) mittels eines Bajonettverschlusses (12) an der Welle (4) befestigt ist.

11. Schälmaschine nach einem der Ansprüche 1 bis 10, dadurch gekennzeichnet, daß zwischen dem Schwenkarm (5) und dem Maschinengestell (2) ein Sensor (13) zur Erfassung einer Schwenkbewegung des Schwenkarms (5) angeordnet ist.

12. Schälmaschine nach Anspruch 11, dadurch gekennzeichnet, daß der Sensor (13) mit einer Steuereinrichtung zur Betätigung der zugeordneten Messerstation (1) verbunden ist.

13. Schälmaschine nach einem der Ansprüche 1 bis 12, dadurch gekennzeichnet, daß die Transportwalze (3) aus einem weichelastischen Werkstoff gefertigt ist.

14. Schälmaschine nach einem der Ansprüche 1 bis 12, dadurch gekennzeichnet, daß die Transportwalze (3) aus einem hartelastischen Werkstoff gefertigt ist.

15. Schälmaschine nach einem der Ansprüche 1 bis 14, dadurch gekennzeichnet, daß die Transportwalze (3) zylindrisch ausgebildet ist.

16. Schälmaschine nach einem der Ansprüche 1 bis 14, dadurch gekennzeichnet, daß die Transportwalze (3) in ihrem mittleren Bereich mit einem verringerten Durchmesser ausgebildet ist.

17. Schälmaschine nach einem der Ansprüche 1 bis 16, dadurch gekennzeichnet, daß jede Messerstation (1) an einem Schnellwechselträger (14) gelagert ist, welcher an dem Maschinengestell (2) befestigt ist.

18. Schälmaschine nach Anspruch 17, dadurch gekennzeichnet, daß der Schnellwechselträger (14) eine vertikale Trägerplatte (15) umfaßt, welche mit einer Ausnehmung (16) zur Durchführung des Gemüses versehen ist.

19. Schälmaschine nach Anspruch 18, dadurch gekennzeichnet, daß jedes Messer (18) der Messerstation (1) an einer Einlaufplatte (17) gelagert ist, welche schwenkbar an dem Schnellwechselträger (14, 15, 25) gelagert ist.

20. Schälmaschine nach Anspruch 19, dadurch gekennzeichnet, daß die Schwenkachse (19) der Einlaufplatte (17) im wesentlichen in der Ebene der Trägerplatte (15) liegt.

21. Schälmaschine nach einem der Ansprüche 19 oder 20, dadurch gekennzeichnet, daß die Einlaufplatte (17) in einer Schließstellung der Messereinheit (1) elastisch vorgespannt ist.

22. Schälmaschine nach einem der Ansprüche 1 bis 21, dadurch gekennzeichnet, daß das Messer (18) gerade ausgebildet ist.

23. Schälmaschine nach einem der Ansprüche 1 bis 22, dadurch gekennzeichnet, daß das Messer (18) gebogen ausgebildet ist.

## Claims

1. A peeling machine, especially for stick-shaped vegetables, having several knife stations (1), which are disposed one behind another in the direction of passage of the vegetables on a machine frame (2), and also having several pairs of feed rollers (3), which are mounted in particular between two knife stations (1), wherein each feed roller pair (3) is connected to a drive mechanism,
**characterised in that** each feed roller (3) is rotatably mounted by means of a shaft (4) on a swivel arm (5), which is pivoted on the machine frame (2) around a fixed axle (6) disposed perpendicularly to the direction of passage of the vegetables
**and in that** a first driving wheel (7) of the drive mechanism is mounted on the fixed axle (6), which wheel is in driven communication with a second driving wheel (8) which is fixed to the shaft (4) of the feed roller (3).

2. A peeling machine according to Claim 1,
**characterised in that** the first driving wheel (7) and the second driving wheel (8) are constructed as toothed wheels that mesh with one another.

3. A peeling machine according to one of Claims 1 or 2,
**characterised in that** the first driving wheel (7) is coupled with the drive mechanism.

4. A peeling machine according to Claim 1,
**characterised in that** the first driving wheel (7) is connected to a belt wheel (9) which is driven by a belt drive (10) of the drive mechanism.

5. A peeling machine according to one of Claims 1 to 4,
**characterised in that** the driving wheel (8) is mounted on the shaft (4) via a freewheel (30).

6. A peeling machine according to one of Claims 1 to 5,
**characterised in that** a contact pressure device is disposed between the swivel arm (5) and the machine frame (2).

7. A peeling machine according to Claim 6,
**characterised in that** the contact pressure device comprises a piston-cylinder unit (24).

8. A peeling machine according to Claim 6,
**characterised in that** the contact pressure device comprises a spring mechanism (11).

9. A peeling machine according to one of Claims 1 to 8,
**characterised in that** the feed roller (3) is detachably fixed to the shaft (4).

10. A peeling machine according to Claim 9,
**characterised in that** the feed roller (3) is fixed to the shaft (4) by means of a bayonet catch (12).

11. A peeling machine according to one of Claims 1 to 10,
**characterised in that** a sensor (13) for detecting a swivel movement of the swivel arm (5) is disposed between the swivel arm (5) and the machine frame (2).

12. A peeling machine according to Claim 11,
**characterised in that** the sensor (13) is connected to a control mechanism for the operation of the associated knife station (1).

13. A peeling machine according to one of Claims 1 to 12,
**characterised in that** the feed roller (3) is produced from a soft flexible material.

14. A peeling machine according to one of Claims 1 to 12,
**characterised in that** the feed roller (3) is produced from a hard flexible material.

15. A peeling machine according to one of Claims 1 to 14,
**characterised in that** the feed roller (3) has a cylindrical construction.

16. A peeling machine according to one of Claims 1 to 14,
**characterised in that** the feed roller (3) is constructed with a reduced diameter in its central region.

17. A peeling machine according to one of Claims 1 to 16,
**characterised in that** each knife station (1) is mounted on a quick-change carrier (14), which is fixed to the machine frame (2).

18. A peeling machine according to Claim 17,
**characterised in that** the quick-change carrier (14) comprises a vertical carrier plate (15), which is provided with a clearance (16) for the passage of the vegetables.

19. A peeling machine according to Claim 18,
**characterised in that** each knife (18) of the knife station (1) is mounted on an inlet plate (17) which is pivoted on the quick-change carrier (14, 15, 25).

20. A peeling machine according to Claim 19,
**characterised in that** the swivel axis (19) of the inlet plate (17) lies substantially in the plane of the carrier plate (15).

21. A peeling machine according to one of Claims 19 or 20,
**characterised in that** the inlet plate (17) is elastically prestressed in a closing position of the knife unit (1).

22. A peeling machine according to one of Claims 1 to 21,
**characterised in that** the knife (18) has a straight construction.

23. A peeling machine according to one of Claims 1 to 22,
**characterised in that** the knife (18) has a curved construction.

## Revendications

1. Machine à éplucher, destinée en particulier à des légumes en forme de tiges, équipée de plusieurs postes à couteaux (1), qui sont disposés dans le sens de passage du légume les uns derrière les autres sur un bâti de machine (2), ainsi que de plusieurs paires de cylindres de transport (3), qui sont montées en particulier chacune entre deux postes à couteaux (1), chaque paire de cylindres de transport (3) étant reliée à un système d'entraînement, caractérisée en ce que chaque cylindre de transport (3) est monté sur un bras orientable (5) de façon pivotante au moyen d'un arbre (4), lequel bras est monté sur le bâti de machine (2) de façon à pouvoir basculer autour d'un axe (6) fixe et disposé perpendiculairement à l'axe de passage du légume, et en ce que sur l'axe (6) fixe est montée une première roue d'entraînement (7) du système d'entraînement, qui est en liaison d'entraînement avec une deuxième roue d'entraînement (8), laquelle est fixée sur l'arbre (4) du cylindre de transport (3).

2. Machine à éplucher selon la revendication 1, caractérisée en ce que la première roue d'entraînement (7) et la deuxième roue d'entraînement (8) sont conçues comme des roues dentées, qui s'engrènent l'une avec l'autre.

3. Machine à éplucher selon l'une quelconque des revendications 1 ou 2, caractérisée en ce que la première roue d'entraînement (7) est couplée avec le système d' entraînement.

4. Machine à éplucher selon la revendication 1, caractérisée en ce que la première roue d'entraînement (7) est reliée à une roue à courroie (9), laquelle est entraînée par une commande de courroie (10) du système d'entraînement.

5. Machine à éplucher selon l'une quelconque des revendications 1 à 4, caractérisée en ce que la roue d'entraînement (8) est montée au moyen d'un pignon fou (30) sur l'arbre (4).

6. Machine à éplucher selon l'une quelconque des revendications 1 à 5, caractérisée en ce qu'un système de force de pression est disposé entre le bras orientable (5) et le bâti de machine (2).

7. Machine à éplucher selon la revendication 6, caractérisée en ce que le système de force de pression comprend une unité piston- cylindre (24).

8. Machine à éplucher selon la revendication 6, caractérisée en ce que le système de force de pression comprend un système à ressort (11).

9. Machine à éplucher selon l'une quelconque des revendications 1 à 8, caractérisée en ce que le cylindre de transport (3) est fixé de façon amovible sur l'arbre (4).

10. Machine à éplucher selon la revendication 9, caractérisée en ce que le cylindre de transport (3) est fixé sur l'arbre (4) au moyen d'une fermeture à baïonnette (12).

11. Machine à éplucher selon l'une quelconque des revendications 1 à 10, caractérisée en ce qu'un capteur (13) destiné à la détection d'un mouvement de basculement du bras orientable (5) est disposé entre le bras orientable (5) et le bâti de machine (2).

12. Machine à éplucher selon la revendication 11, caractérisée en ce que le capteur (13) est relié à un système de commande pour l'actionnement du poste à couteaux (1) attribué.

13. Machine à éplucher selon l'une quelconque des revendications 1 à 12, caractérisée en ce que le cylindre de transport (3) est fabriqué à partir d'un matériau souple et élastique.

14. Machine à éplucher selon l'une quelconque des revendications 1 à 12, caractérisée en ce que le cylindre de transport (3) est fabriqué à partir d'un matériau dur et élastique.

15. Machine à éplucher selon l'une quelconque des revendications 1 à 14, caractérisée en ce que le cylindre de transport (3) est conçu avec une forme cylindrique.

16. Machine à éplucher selon l'une quelconque des revendications 1 à 14, caractérisée en ce que le cylindre de transport (3) est conçu dans sa zone centrale avec un diamètre réduit.

17. Machine à éplucher selon l'une quelconque des revendications 1 à 16, caractérisée en ce que chaque poste à couteaux (1) est monté sur un support à changement rapide (14), lequel est fixé sur le bâti de machine (2).

18. Machine à éplucher selon la revendication 17, caractérisée en ce que le support à changement rapide (14) comprend une plaque support (15) verticale, qui est pourvue d'un évidement (16) pour le passage du légume.

19. Machine à éplucher selon la revendication 18, caractérisée en ce que chaque couteau (18) du poste à couteaux (1) est monté sur une plaque d'entrée (17), laquelle est montée de façon pivotante sur le support à changement rapide (14, 15, 25).

20. Machine à éplucher selon la revendication 19, caractérisée en ce que l'axe de pivotement (19) de la plaque d'entrée (17) se situe sensiblement dans le plan de la plaque support (15).

21. Machine à éplucher selon l'une quelconque des revendications 19 ou 20, caractérisée en ce que la plaque d'entrée (17) est précontrainte de façon élastique dans une position de fermeture de l'unité à couteaux (1).

22. Machine à éplucher selon l'une quelconque des revendications 1 à 21, caractérisée en ce que le couteau (18) est conçu avec une forme droite.

23. Machine à éplucher selon l'une quelconque des revendications 1 à 22, caractérisée en ce que le couteau (18) est conçu avec une forme courbe.
